# EUROPÄISCHE PATENTSCHRIFT

(11) **EP 1 636 062 B1**
(45) Veröffentlichungstag und Bekanntmachung des Hinweises auf die Patenterteilung: **30.12.2009**
(21) Anmeldenummer: 04739879.7
(22) Anmeldetag: 15.06.2004
(51) Int. Cl.: B60N 2/22

(54) **SPORTSITZ FÜR EIN FAHRZEUG, INSBESONDERE FÜR EIN KRAFTFAHRZEUG**
SPORTS SEAT FOR A VEHICLE, ESPECIALLY FOR A MOTOR VEHICLE
SIEGE DE SPORT DESTINE A UN VEHICULE, NOTAMMENT A UN VEHICULE MOTORISE

(30) Priorität: 20.06.2003 DE 10327639
(43) Veröffentlichungstag der Anmeldung: 22.03.2006
(73) Patentinhaber: Recaro GmbH & Co. KG, 73230 Kirchheim/Teck (DE)
(72) Erfinder: BEERMANN, Frank, 73230 Kirchheim-Teck (DE); MUELLNER, Friedrich, 73252 Lenningen-Schopfloch (DE)
(74) Vertreter: Patentanwälte Hosenthien-Held und Dr. Held
(86) Internationale Anmeldenummer: PCT/EP2004/006404
(87) Internationale Veröffentlichungsnummer: WO 2004/113114

(56) Entgegenhaltungen:
- DE-A- 1 755 333
- DE-A1- 4 220 471
- DE-U1- 8 033 029
- US-A- 3 951 451
- US-A- 4 169 626
- US-A- 4 522 445
- US-A- 5 344 215
- US-B1- 6 802 563

## Beschreibung

Die Erfindung betrifft einen Sportsitz für ein Fahrzeug, insbesondere für ein Kraftfahrzeug, mit den Merkmalen des Oberbegriffs des Anspruches 1.

In der DE-OS 1 755 333 ist ein bekannter Sportsitz beschrieben, bei welchem die Lehnenschale mittels einer gelenkigen Verbindung an der Sitzschale angelenkt ist. Die Neigungseinstellung erfolgt mittels einer Spindel und je einer Spindelmutter an jeder Schale. Für eine seitliche Abstützung des Insassens sind die beiden Schale konturiert, insbesondere sind die Seitenränder hoch- bzw. vorgezogen. Polsterung und Bezug sind direkt an den Schalen angebracht.

Die US 4,169,626A zeigt einen bekannten Sportsitz der eingangs genannten Art, dessen Sitzschale und Lehnenschale spezielle Vorsprünge und Aufnahmen für die Befestigung eines Beschlags aufweisen. Das mit der Lehne in Verbindung stehende Beschlagoberteil ist für eine Neigungseinstellung der Lehnenschale relativ zu einem Beschlagunterteil verdrehbar. Das Beschlagunterteil ist an der Sitzschale angelenkt und mit dieser verriegelt. Durch Entriegeln ist des Beschlagunterteils ist die Lehnenschale samt Beschlag relativ zur Sitzschale freischwenkbar.

Der Erfindung liegt die Aufgabe zu Grunde, einen Sportsitz der eingangs genannten Art zu verbessern. Diese Aufgabe wird erfindungsgemäß durch einen Sportsitz mit den Merkmalen des Anspruches 1 gelöst. Vorteilhafte Ausgestaltungen sind Gegenstand der Unteransprüche.

Indem die Neigungseinstellung mittels Beschlägen erfolgt, welche ein mit der Sitzschale in fester Verbindung stehendes Beschlagunterteil und ein mit der Lehnenschale in Verbindung stehendes, relativ zum Beschlagunterteil verdrehbares Beschlagoberteil aufweisen, also mit Lehnenneigungseinstellbeschlägen, wie sie bei Fahrzeugsitzen mit Rahmenstrukturen bekannt sind, werden die Vorteile einer einfachen, leichten und sportlichen Bauweise kombiniert mit den Vorteilen einer komfortablen Lehnenneigungseinstellung zur Anpassung der Lehnenneigung an die Sitzhaltung des Benutzers.

Zudem können als Beschläge standardisierte Serienprodukte eingesetzt werden, was Werkzeugkosten spart. Es steht die volle Funktionalität der Beschläge zur Verfügung, beispielsweise auch eine Freischwenkfunktion, welche bei dem eingangs genannten Sportsitz eine in der DE-OS 2 001 842 offenbarte, besondere Lösung erfordert. Durch Kombination mit verfahrbaren Sitzschienen kann noch die Sitzlängsposition optimiert werden, was den Komfort steigert.

Für eine einfache Montage der standardisierten Beschlägen sind erfindungsgemäß an jedem Beschlag zwei Adapter angebracht, welche wiederum jeweils an einer der beiden Schalen befestigt sind. Die Befestigungsbereiche für die Adapter an den Schalen sind vorzugsweise verstärkt, damit sie einerseits die notwendigen Kräfte aufnehemen können und andererseits die Gefahr des Einreißens der Schalen gebannt wird. Der an der Sitzschale befestigte Adapter kann zugleich als Unterbau dienen, d.h. er weist Winkel, Füße oder ähnliches auf, was die Anzahl der notwendigen Bauteile und den Montageaufwand reduziert.

Ein beweglicher Seitenwangenbügel schwellerseitig an der Sitzschale, der für den Seitenhalt des Insassens gegenüber der Mittelbahn angehoben und für den Ein- und Ausstieg abgesenkt ist, kann für einen komfortableren Ein- und Ausstieg die Form des Sportsitzes kurzfristig geändert werden, ohne dass das sportliche Fahrgefühl und der Seitenhalt bei schneller Kurvenfahrt beeinträchtigt wird. Die ist insbesondere bei tiefer gelegten Kraftfahrzeugen von Vorteil. Solche beweglichen Seitenwangen sind ansonsten nur bei Fahrzeugsitzen mit Rahmenstrukturen bekannt, beispielsweise aus der DE 31 51 018 A1 oder der DE 32 16 060 A1.

Der Seitenwangenbügel, worunter auch eine flächige Ausgestaltung verstanden werden soll, kann beispielsweise an der Sitzschale oder an einem an der Sitzschale befestigten Adapter angelenkt sein, was eine definierte Bewegung sicherstellt. Am freien Ende erfolgt dann eine Führung der Bewegung in Umfangsrichtung, näherungsweise in tangentialer Richtung. Um im Beinbereich möglichst tief absenken zu können, ist der Seitenwangenbügel vorzugsweise an seinem in Fahrtrichtung hinteren Ende angelenkt, beispielsweise im Bereich des Beschlags, und an seinem vorderen Ende verschieblich gelagert. Alternativ kann der Seitenwangenbüger linear verschieblich an der Sitzschale oder an einem an der Sitzschale befestigten Adapter oder an einem die Sitzschale tragenden Unterbau angebracht sein, wodurch ein über die Sitzlänge gleichmäßiges Absenken und Anheben erreicht wird. Die Führung kann beispielsweise mittels zweier paralleler Säulen erfolgen, die zugleich den Seitenwangenbügel tragen. In beiden Fällen ist vorzugsweise ein Rastmechanismus vorgesehen, der den Seitenwangenbügel relativ zur Sifzschale lösbar arretiert und durch ein leicht zugängliches Bedienelement zu lösen ist. Die Arretierung kann auch auf andere, an sich bekannte Weise erfolgen.

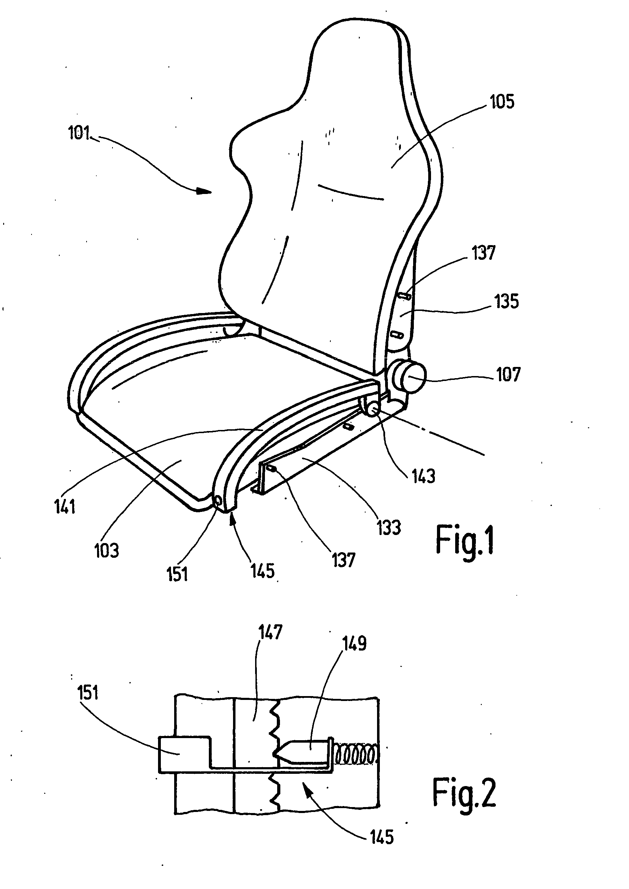

Im folgenden ist die Erfindung anhand zweier in der Zeichnung dargestellter Ausführungsbeispiele näher erläutert. Es zeigen
- Fig. 1: eine perspektivische Ansicht der Struktur des ersten Ausführungsbeispiels von schräg vorne,
- Fig. 2: einen schematisierten Schnitt durch einen Rastmechanismus,

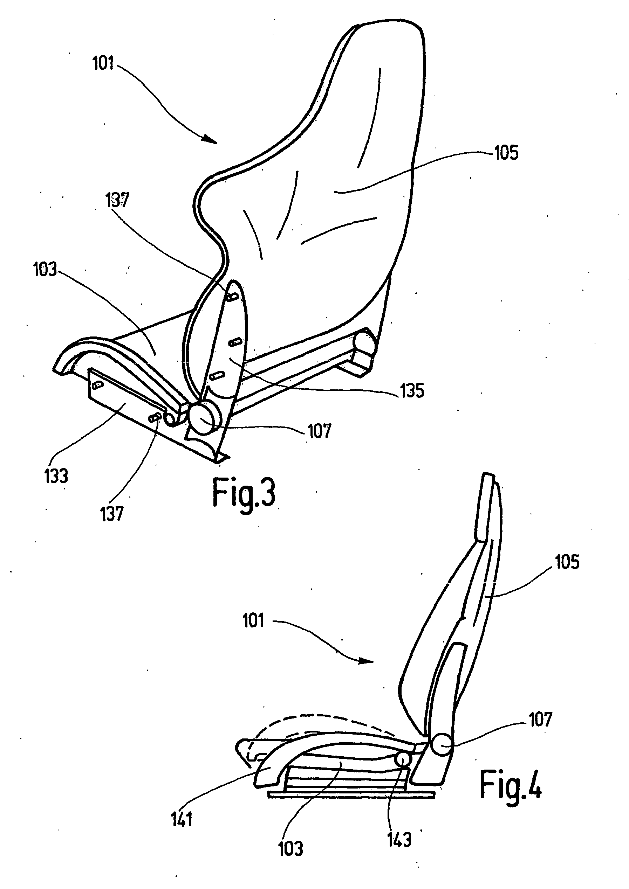

- Fig. 3: eine perspektivische Ansicht der Struktur des ersten Ausführungsbeispiels von schräg hinten,
- Fig. 4: eine Seitenansicht des gepolsterten ersten Ausführungsbeispiels mit abgesenktem Seitenwangenbügel und gestrichtelt mit angehobenem Seitenwangenbügel,

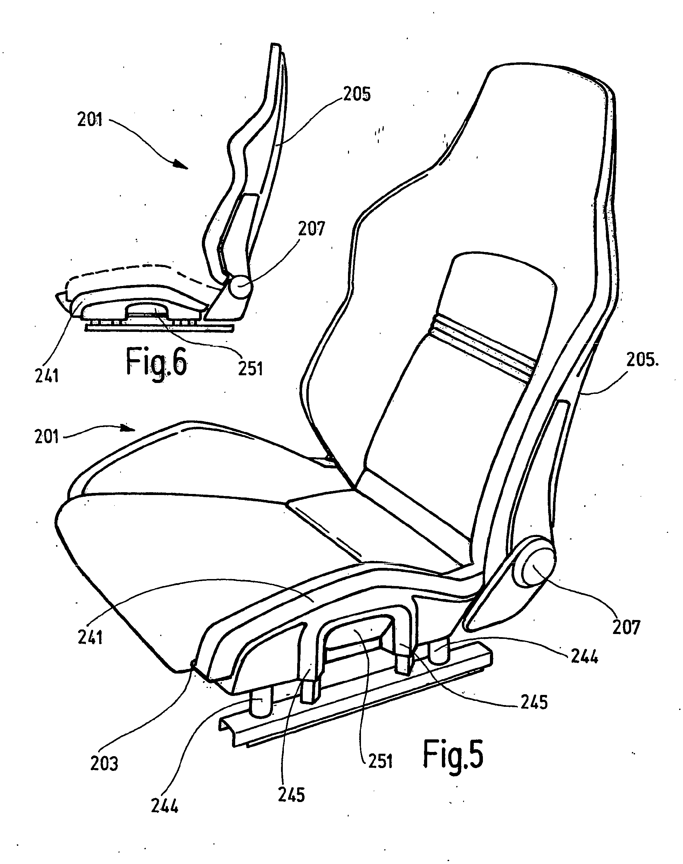

- Fig. 5: eine perspektivische Ansicht des zweiten Ausführungsbeispiels von schräg vorne, und

- Fig. 6: eine Seitenansicht des zweiten Ausführungsbeispiels mit abgesenktem Seitenwangenbügel und gestrichtelt mit angehobenem Seitenwangenbügel.

Im ersten Ausführungsbeispiel weist ein als Schalensitz ausgebildeter Sportsitz 101 eine einstückige, konturierte (d.h. mit angeformten, abgewinkelten Bereichen versehene), starre Sitzschale 103 als Struktur für das Sitzteil und eine gesondert ausgebildete, ebenfalls einstückige, stark konturierte, starre Lehnenschale 105 als Struktur für die Lehne auf. Die Lehnenschale 105 ist mittels Beschlägen 107 neigungseinstellbar an der Sitzschale 103 angebracht. Die Sitzschale 103 und die Lehnenschale 105 sind aus einem an sich bekannten Material gefertigt, beispielsweise aus einem Glasfaser-, einem Kohlefaser- oder einem Kunststoffmaterial, welches mit Glasfaser- oder Kohlefasermatten verstärkt ist. Die Polsterung der Sitzschale 103 und der Lehnenschale 105 erfolgt auf an sich bekannte Weise mit Schaumstoff und einem Bezug, beispielsweise aus Leder.

Die Beschläge 107 weisen jeweils relativ zueinander verdrehbare Beschlagunterteile und Beschlagoberteile auf. Zur Befestigung der Beschläge 107 sind die Seitenpartien der Sitzschale 103 und der Lehnenschale 105 bereichsweise eben ausgebildet und für eine Kraftaufnahme ausgelegt, d.h. beispielsweise verstärkt und/oder mit Sicken oder dergleichen versehen. Zusätzlich sind zur Vermeidung der Rißbildung im Bereich der Befestigungsbereiche Einlegeteile aus Metall oder hartem Kunststoff vor dem Verpressen in das Schalenmaterial eingelegt und dann mit diesem verpreßt worden. An die so verstärkten Seitenpartien der Sitzschale 103 bzw. der Lehnenschale 105 sind ein mit dem Beschlagunterteil verbundener Sitzteiladapter 133 bzw. ein mit dem Beschlagoberteil verbundener Lehnenadapter 135 flach angelegt und mittels Schrauben 137 angebracht oder anderweitig befestigt. Der Sitzteiladapter 133, welcher an seiner Unterseite abgewinkelt ausgebildet ist, dient zugleich als Unterbau zur Befestigung an der Fahrzeugstruktur oder optional an der Oberschiene eines Sitzschienenpaares. Die beiden Adapter 133 und 135 sind beim fertig gepolsterten Sportsitz 101 durch Kunststoffabdeckungen verblendet.

Während an der Lehnenschale 105 die Seitenwangen angeformt sind, wird bei der Sitzschale 103 die Struktur der Seitenwange durch einen Seitenwangenbügel 141 definiert. Zumindest der schwellerseitige Seitenwangenbügel 141 ist an seinem hinteren Ende mittels eines um eine horizontale Achse schwenkenden Gelenks 143 an der Sitzschale 103 angelenkt. Am vorderen Ende ist der Seitenwangenbügel 141 mittels eines Rastmechanismus 145, bestehend aus einer sitzschalenfesten Rastleiste 147 und einem federbelastet im Seitenwangenbügel 141 gelagerten Rastbolzen 149, der durch ein druckknopfartiges Betätigungselement 151 aushebbar ist, lösbar arretiert. Für einen erleicherten Ausstieg kann der Insasse durch Druck auf das Betätigungselement 151 den Rastmechanismus 145 lösen und den dann höhenveränderlichen Seitenwangenbügel 141 nach unten schwenken, bis der abgesenkte Seitenwangenbügel 141 weitgehend unterhalb der Mittelbahn der gepolsterten Sitzschale 103 zu liegen kommt. Umgekehrt kann der Insasse nach dem erleichterten Einstieg den Seitenwangenbügel 141 in die oberste, gegenüber der Mittelbahn angehobenen Position schwenken, um während der Fahrt mit dem angehobenen Seitenwangenbügel 141 den maximalen Seitenhalt zu erzielen.

Das zweite Ausführungsbeispiel gleicht dem ersten Ausführungsbeispiel, soweit nicht abweichend beschrieben, weshalb gleiche und gleichwirkende Bauteile um 100 höhere Bezugszeichen tragen. Auch bei diesem Sportsitz 201 sind die Sitzschale 203 und die Lehnenschale 205 mittels Beschlägen 207 auf die gleiche Weise wie im vorigen Ausführungsbeispiel miteinander gelenkig verbunden. Der schwellerseitige Seitenwangenbügel 241 ist nun linear verschieblich gelagert, indem er auf zwei vertikalen Säulen 244 sitzt und durch zwei Rastmechanismen 245 der beim ersten Ausführungsbeispiel beschriebenen Art arretiert ist, wobei die beiden Rastmechanismen 245 durch ein gemeinsames Betätigungselement 251 gekoppelt sind. Die Säulen 244 wiederum sind an einem Unterbau angebracht, welcher die Sitzschale 203 trägt. Das Betätigungselement 251 ist vorzugsweise als Handgriff ausgebildet und in der Mitte des symmetrisch ausgebildeten Seitenwangenbügels 241 angeordnet, so daß der Insasse mit dem Lösen des Rastmechanismus 245 zugleich das Verschieben des Seitenwangenbügels 241 vornehmen kann.

### Bezugszeichenliste

- 101, 201: Sportsitz
- 103, 203: Sitzschale
- 105, 205: Lehnenschale
- 107, 207: Beschlag
- 133: Sitzteiladapter
- 135: Lehnenadapter
- 137: Schraube
- 141, 241: Seitenwangenbügel
- 143: Gelenk
- 145, 245: Rastmechanimus
- 147: Rastleiste
- 149: Rastbolzen
- 151, 251: Betätigungselement
- 244: Säule

## Patentansprüche

1. Sportsitz für ein Fahrzeug, insbesondere für ein Kraftfahrzeug, mit wenigstens einer starren Sitzschale (103; 203) als Struktur für das Sitzteil und einer gesondert ausgebildeten, starren Lehnenschale (105; 205) als Struktur für die Lehne, welche relativ zueinander mittels Beschlägen (107; 207) neigungseinstellbar sind, welche ein mit der Sitzschale (103; 203) in fester Verbindung stehendes Beschlagunterteil und ein mit der Lehnenschale (105; 205) in Verbindung stehendes, relativ zum Beschlagunterteil verdrehbares Beschlagoberteil aufweisen, **dadurch gekennzeichnet, dass** bei jedem Beschlag (107; 207) an Beschlagunterteil und Beschlagoberteil je ein Adapter (133, 135) angebracht ist, welcher jeweils an einer der Schalen (103, 105; 203, 205) befestigt ist, wofür die Seitenpartien der Schalen (103, 105; 203, 205) bereichsweise eben ausgebildet und für eine Kraftaufnahme ausgelegt sind.

2. Sportsitz nach Anspruch 1, **dadurch gekennzeichnet, dass** die Befestigungsbereiche für die Adapter (133, 135) an den Schalen (103, 105; 203, 205) verstärkt sind.

3. Sportsitz nach Anspruch 1 oder 2, **dadurch gekennzeichnet, dass** die Befestigungsbereiche für die Adapter (133, 135) an den Schalen (103, 105; 203, 205) mit Sicken versehen sind.

4. Sportsitz nach einem der vorhergehenden Ansprüche, **dadurch gekennzeichnet, dass** die Schalen (103, 105; 203, 205) einstückig, konturiert und starr ausgebildet sind.

5. Sportsitz nach einem der vorhergehenden Ansprüche, **dadurch gekennzeichnet, dass** die Schalen (103, 105; 203, 205) aus einem Glasfaser-, Kohlefaser- oder Kunststoffmaterial gefertigt ist, welches mit Glasfaser- oder Kohlefasermatten verstärkt ist.

6. Sportsitz nach Anspruch 5, **dadurch gekennzeichnet, dass** im Bereich der Befestigungsbereiche Einlageteile aus Metall oder hartem Kunststoff vor dem Verpressen in das Schalenmaterial eingelegt und dann mit diesem verpresst worden sind.

7. Sportsitz nach Anspruch 2 oder 6, **dadurch gekennzeichnet, dass** die Adapter (135, 135) an die verstärkten Seitenpartien der Schalen (103, 105; 203, 205) flach angelegt und daran befestigt sind.

8. Sportsitz nach einem der vorhergehenden Ansprüche, **dadurch gekennzeichnet, dass** die Adapter (133, 135) beim fertig gepolsterten Sportsitz (101) durch Kunststoffabdeckungen verblendet sind.

9. Sportsitz nach einem der vorhergehenden Ansprüche, **dadurch gekennzeichnet, dass** der an der Sitzschale (103; 203) befestigte Adapter (133) zugleich als Unterbau dient.

10. Sportsitz nach einem der vorhergehenden Ansprüche, **dadurch gekennzeichnet, dass** die Sitzschale (103; 203) wenigstens schwellerseitig einen beweglichen Seitenwangenbügel (141; 241) aufweist, der für den Seitenhalt des Insassens gegenüber der Mittelbahn angehoben und für den Ein- und Ausstieg abgesenkt ist.

11. Sportsitz nach Anspruch 10, **dadurch gekennzeichnet, dass** der Seitenwangenbügel (141) an der Sitzschale (103) oder an einem an der Sitzschale (103) befestigten Adapter (133) angelenkt ist.

12. Sportsitz nach Anspruch 10, **dadurch gekennzeichnet, dass** der Seitenwangenbügel (241) linear verschieblich an der Sitzschale (203) oder an einem an der Sitzschale (203) befestigten Adapter (233) oder an einem die Sitzschale (203) tragenden Unterbau angebracht ist.

## Claims

1. A sports seat for a vehicle, especially for a motor vehicle, having at least one rigid seat shell (103; 203) as a structure for the seat part and a separately formed, rigid backrest shell (105; 205) as a structure for the backrest, said shells being adjustable in inclination relative to each other by means of fittings (107; 207) which have a lower part connected fixedly to the seat shell (103; 203) and an upper part which is connected to the backrest shell (105; 205) and can be rotated relative to the lower part, **characterized in that**, for each fitting (107; 207), an adapter (133, 135) is respectively fitted to the lower part and upper part, and is fastened in each case to one of the shells (103, 105; 203, 205), for which the side parts of the shells (103, 105; 203, 205) are of flat design in some regions and designed for absorbing force.

2. The sports seat as claimed in claim 1, **characterized in that** the regions in which the adapters (133, 135) are fastened to the shells (103, 105; 203, 205) are reinforced.

3. The sports seat as claimed in claim 1 oder 2, **characterized in that** the regions in which the adapters (133, 135) are fastened to the shells (103, 105; 203, 205) are provided with beads.

4. The sports seat as claimed in one of the preceding claims, **characterized in that** the shells (103, 105; 203, 205) are designed as a single-piece, contoured, and rigid.

5. The sports seat as claimed in one of the preceding claims, **characterized in that** the shells (103, 105; 203; 205) are manufactured from a glass fiber material, a carbon fiber material or a plastic material, which is reinforced with mats of glass fibers or carbon fibers.

6. The sports seat as claimed in claim 5, **characterized in that** in the fastening regions, inserts of metal or hard plastic have been placed into the shell material before the pressing takes place and have then been pressed to the latter.

7. The sports seat as claimed in claim 2 or 6, **characterized in that** the adapters (133, 135) are placed flat onto the reinforced side parts of the shells (103, 105; 203, 205) and are fixed to them.

8. The sports seat as claimed in one of the preceding claims, **characterized in that** in the completed padded sport seat (101), the two adapters (133, 135) are covered by plastic covers.

9. The sports seat as claimed in one of the preceding claims, **characterized in that** the adapter (133) which is fastened to the seat shell (103; 203) serves at the same time as a substructure.

10. The sports seat as claimed in one of the preceding claims, **characterized in that** the seat shell (103; 203) has, at least on the sill side, a moveable side cheek bow (141; 241) which is raised with respect to the central length to laterally grip the occupant and is lowered for entry and exit purposes.

11. The sports seat as claimed in claim 10, **characterized in that** the side cheek bow (141) is coupled to the seat shell (103) or to an adapter (133) fastened to the seat shell (103).

12. The sports seat as claimed in claim 10, **characterized in that** the side cheek bow (241) is fitted in a linearly displaceable manner to the seat shell (203) or to one of the adapters (233) fastened to the seat shell (203) or to a substructure supporting the seat shell (203).

## Revendications

1. - Siège de sport pour un véhicule, en particulier pour un véhicule automobile, comportant au moins une coque de siège rigide (103 ; 203) en tant que structure pour la partie de siège et une coque de dossier rigide (105 ; 205) formée séparément en tant que structure pour le dossier, lesdites coques étant aptes à être réglées en inclinaison l'une par rapport à l'autre au moyen d'armatures (107 ; 207) qui comportent une partie inférieure d'armature fixement reliée à la coque de siège (103 ; 203) et une partie supérieure d'armature apte à tourner par rapport à la partie inférieure d'armature, reliée à la coque de dossier (105 ; 205), **caractérisé par le fait que**, pour chaque armature (107 ; 207), un adaptateur (133, 135) est monté sur la partie inférieure d'armature et sur la partie supérieure d'armature, ledit adaptateur étant respectivement fixé sur l'une des coques (103, 105 ; 203, 205), ce pour quoi les parties latérales des coques (103, 105 ; 203, 205) sont réalisées plates par zones et sont conçues pour absorber une force.

2. - Siège de sport selon la revendication 1, **caractérisé par le fait que** les zones de fixation pour les adaptateurs (133, 135) sur les coques (103, 105 ; 203, 205) sont renforcées.

3. - Siège de sport selon l'une des revendications 1 ou 2, **caractérisé par le fait que** les zones de fixation pour les adaptateurs (133, 135) sur les coques (103, 105 ; 203, 205) sont munies de bourrelets.

4. - Siège de sport selon l'une des revendications précédentes, **caractérisé par le fait que** les coques (103, 105 ; 203, 205) sont formées d'un seul tenant, profilées et rigides.

5. - Siège de sport selon l'une des revendications précédentes, **caractérisé par le fait que** les coques (103, 105 ; 203, 205) sont fabriquées à partir de fibres de verre, de fibres de carbone ou d'une matière plastique qui est renforcée par des mats de fibres de verre ou de fibres de carbone.

6. - Siège de sport selon la revendication 5, **caractérisé par le fait qu'**au voisinage des zones de fixation, des pièces d'insertion en métal ou en matière plastique dure ont été placées dans le matériau de coque avant la compression, puis ont été pressées avec celui-ci.

7. - Siège de sport selon l'une des revendications 2 ou 6, **caractérisé par le fait que** les adaptateurs (133, 135) sont placés à plat sur les parties latérales renforcées des coques (103, 105 ; 203, 205) et sont fixés à celles-ci.

8. - Siège de sport selon l'une des revendications précédentes, **caractérisé par le fait que**, dans le siège de sport rembourré terminé (101), les adaptateurs (133, 135) sont recouverts de revêtements en matière plastique.

9. - Siège de sport selon l'une des revendications précédentes, **caractérisé par le fait que** les adaptateurs (133) fixés sur la coque de siège (103 ; 203) font en même temps office de sous-structure.

10. - Siège de sport selon l'une des revendications précédentes, **caractérisé par le fait que** la coque de siège (103 ; 203) comporte, côté seuil, au moins un arceau de joue latéral mobile (141 ; 241), qui est levé par rapport à la glissière centrale pour le support latéral de l'occupant et abaissé pour l'entrée et la sortie.

11. - Siège de sport selon la revendication 10, **caractérisé par le fait que** l'arceau de joue latéral (141) est articulé sur la coque de siège (103) ou sur un adaptateur (133) fixé sur la coque de siège (103).

12. - Siège de sport selon la revendication 10, **caractérisé par le fait que** l'arceau de joue latéral (241) est monté de manière à être linéairement mobile sur la coque de siège (203) ou sur un adaptateur (233) fixé sur la coque de siège (203) ou sur une sous-structure portant la coque de siège (203).
